(19) Europäisches Patentamt
European Patent Office
Office européen des brevets

(11) **EP 0 840 863 B1**

(12) **EUROPÄISCHE PATENTSCHRIFT**

(45) Veröffentlichungstag und Bekanntmachung des Hinweises auf die Patenterteilung:
**11.04.2001   Patentblatt 2001/15**

(51) Int Cl.⁷: **F16H 61/00**

(21) Anmeldenummer: **96926376.3**

(22) Anmeldetag: **20.07.1996**

(86) Internationale Anmeldenummer:
**PCT/EP96/03208**

(87) Internationale Veröffentlichungsnummer:
**WO 97/05407 (13.02.1997 Gazette 1997/08)**

(54) **System zur Regelung des Übersetzungsverhältnisses eines stufenlosen Getriebes**

System for Controlling the Transmission Ratio of a continuously variable Transmission

Système de commande du rapport de transmission d'und transmission à reglage continu

(84) Benannte Vertragsstaaten:
**DE FR GB IT SE**

(30) Priorität: **27.07.1995   DE 19527412**

(43) Veröffentlichungstag der Anmeldung:
**13.05.1998   Patentblatt 1998/20**

(73) Patentinhaber: **ZF-Batavia, L.L.C.**
**Plymouth, Michigan 48170-2456 (US)**

(72) Erfinder:
• **KNAPP, Thomas**
**D-88090 Immenstaad (DE)**

• **ESCHRICH, Gerhard**
**D-88069 Tettnang (DE)**
• **RUNGE, Wolfgang**
**D-88214 Ravensburg (DE)**

(74) Vertreter: **Zietlow, Karl-Peter**
**ZF FRIEDRICHSHAFEN AG**
**88038 Friedrichshafen (DE)**

(56) Entgegenhaltungen:
EP-A- 0 260 117      EP-A- 0 281 850
EP-A- 0 364 270      DE-A- 3 636 463
DE-A- 4 229 585

**Beschreibung**

Die Erfindung bezieht sich auf ein System zur Regelung des Übersetzungsverhältnisses eines stufenlosen Getriebes in einem Fahrzeug mit einem Antriebsmotor und einer Leistungsregeleinrichtung. Dieser werden über ein Fahrpedal Soll-Drehzahlwerte des Antriebsmotors vorgegeben. Die Soll-Drehzahlwerte werden mit gemessenen Ist-Drehzahlwerten verglichen. Das System weist ferner eine Stellvorrichtung zur Veränderung des Übersetzungsverhältnisses des stufenlosen Getriebes auf. Ihr werden Stellsignale eines Drehzahlreglers zugeführt, die sich aus den Differenzen von Soll- und Ist-Drehzahlwerten des Antriebsmotors ergeben.

In der Regel haben die eingangs erwähnten stufenlosen Getriebe Kegelscheiben, die zwischen sich ein umlaufendes Zugmittel einschließen. Über die hydraulisch wirkende Stellvorrichtung werden axiale Anpreßkräfte auf die Kegelscheiben ausgeübt.

Zur Regelung eines stufenlosen Getriebes über ein Steuerorgan (Gas- oder Fahrpedal) dient die Stellung der Drosselklappe oder dergleichen als Eingangsgröße. Für diese Eingangsgröße wird ein Soll-Drehzahlwert für den Antriebsmotor vorgegeben, der mit dem aktuellen Drehzahlwert verglichen wird. Regelabweichungen lösen die Verstellung des Getriebes beispielsweise über ein Magnetventil aus. Bei zu niedriger Drehzahl wird die Übersetzung kürzer, bei hoher Drehzahl wird sie länger eingestellt. Der Regelkreis schließt sich durch einen erneuten Vergleich mit dem aktuellen Drehzahlwert.

Bei den bekannten Betriebsstrategien wird davon ausgegangen, daß der Fahrer über die Stellung des Steuerorgans einen Leistungswunsch vorgibt, aus dem, gegebenenfalls unter dem Einfluß von Optimierungskriterien (Fahrweise, Fahrumgebung), eine gewünschte Motordrehzahl nM-Soll resultiert. Ein Optimierungskriterium kann beispielsweise der Schnittpunkt einer Linie minimalen Kraftstoffverbrauchs mit der aktuellen Linie der Drosselklappenstellung im Motorkennfeld sein. Die zugehörige Übersetzung des stufenlosen Getriebes iV-Soll ergibt sich dann als Folgegröße aus der gewünschten Motordrehzahl nM-Soll und der aktuellen Fahrzeuggeschwindigkeit vF. Durch den Einsatz einer elektronischen Getriebesteuerung können unterschiedliche Fahrprogramme (in der Regel ökonomisch oder leistungsorientiert) über einen Schalter, der zum Beispiel am Wählhebel angeordnet sein kann, ausgewählt werden.

Je nachdem, welches Fahrprogramm aktiv ist, sind unterschiedliche Reaktionsgeschwindigkeiten, abhängig von der Größe der Änderung der Drosselklappenstellung bzw. der Verstellgeschwindigkeit, zu erwarten bzw. beabsichtigt.

Für die Anforderungen an die Hydraulik, Kinematik und das Zeitverhalten des Systems sind die Massenträgheiten von Getriebe und Motor wesentlich. Dies bedeutet unter anderem, daß eine zu schnelle Verstellung während einer Rückschaltung zu einer Fahrzeugbremsung führt, da alle rotierenden Massen aus der Fahrzeugträgheit beschleunigt werden müssen und daß keine Geschwindigkeitszunahme während der Verstellung zu verzeichnen ist, da das Motormoment voll zur Beschleunigung der rotierenden Massen des Getriebes und des Motor genutzt wird. Diese Tatsache macht sich bei bestimmten Fahrzuständen nachteilig bemerkbar. So beispielsweise dann, wenn der Fahrer bei einer Rückschaltung eine verzögerungsfreie Beschleunigung erwartet. Um eine kontinuierliche Geschwindigkeitszunahme zu gewährleisten, muß die Verstellgeschwindigkeit, d. h. die Veränderung der Übersetzung des stufenlosen Getriebes über der Zeit, variabel sein. Hierbei ist der zeitliche Verlauf der Verstellung von grundsätzlicher Bedeutung für die Qualität der Regelung und damit letztlich auch für den erzielbaren Fahrkomfort.

Die DE-A 36 36 463 schlägt ein Verfahren zur Begrenzung der Verstellgeschwindigkeit vor. Eine solche Begrenzung erfolgt im wesentlichen aus Gründen des Komforts, denn es sollen Momentensprünge und ungewollte Fahrzeugbeschleunigungen bzw. -verzögerungen vermieden werden. Ferner soll ein möglichst direkter Bezug zwischen der Stellung des Steuerorgans (Fahrpedal) und dem Fahreindruck hergestellt werden (Verbesserung des subjektiven Fahreindrucks, Driveability).

Aus der EP-A 0 364 270 ist ein Steuersystem für ein stufenloses Getriebe bekanntgeworden, bei dem Sensoren zum Erfassen der Drehzahlen der Kegelscheiben und des Öffnungsgrades der Drosselklappe vorgesehen sind. Aus der Drosselklappenöffnung wird eine Soll-Übersetzung errechnet. Der Verstellgradient, mit dem die Übersetzung des stufenlosen Getriebes herbeigeführt wird, wird in Abhängigkeit der aktuellen Fahrgeschwindigkeit korrigiert. Die Verstellung erfolgt bei geringeren Fahrzeuggeschwindigkeiten relativ schnell, während bei höheren Fahrgeschwindigkeiten der Verstellgradient (diV/dt) reduziert wird.

Schließlich ist gemäß dem Oberbegriff des Anspruchs 1 aus der DE-A 42 29 585 eine Vorrichtung bzw. ein System zur Regelung des Übersetzungsverhältnisses eines stufenlosen Getriebes bekanntgeworden, bei der bzw. dem ein stationärer Soll-Drehzahlwert einem Betriebskennfeld entnommen und einem Sollwertfilter zugeleitet wird, an dessen Ausgang ein instationärer Soll-Drehzahlwert ansteht. Der Sollwertfilter beeinflußt das dynamische Verhalten. Durch geeignete Übertragungsfunktionen läßt sich eine bestimmte Charakteristik des Verstellverhaltens erzielen.

Die zum Stand der Technik zählenden Vorschläge verfolgen sämtlich das Ziel, einem Nachteil eines stufenlosen Getriebes zu begegnen: In besonderen Situationen reagiert das stufenlose Getriebe mit einem ungleichmäßigen Beschleunigungsverhalten. Das subjektive Fahrempfinden (Driveability) läßt sich objektiv durch folgendes Verhalten verdeutlichen: Auf eine sprungförmige Änderung der Drosselklappenstellung springt der Soll-Drehzahlwert des Antriebsmotors in die Höhe. Im Gegensatz zu dieser signifikanten Erhöhung der Motordrehzahl bleibt die Fahrzeuggeschwindigkeit über einen gewissen Zeitraum zunächst konstant. Nachteilig ist vor allem, daß der Fahrer demnach zunächst keine Beschleunigung des Fahrzeugs verspürt. Unter ungünstigen Verhältnissen, d. h. bei nicht angepaßtem Verstellgradient für die Übersetzung, tritt zudem eine kurzzeitige Verzögerung des Fahrzeugs auf. Dieses Verhalten wird vom Fahrer nicht erwartet und daher als unangenehm empfunden. Erschwerend tritt hinzu, daß der Fahrer, der über das Fahrpedal einen Leistungsbedarf angemeldet hat, aber trotz signifikanter Erhöhung der Motordrehzahl keine Beschleunigung des Fahrzeugs erfährt, diese Situation dadurch zu bereinigen versucht, indem er einen noch höheren Leistungsbedarf anmeldet. Die Folge hiervon ist ein Übersteuern der Drosselklappe. Bei einsetzender Reaktion führt diese Übersteuerung zu einem Losschießen des Fahrzeugs. Diese Nachteile sind gemeint, wenn im Zusammenhang mit stufenlosen Getrieben vom sogenannten "Hosenträgereffekt" gesprochen wird.

Der vorliegenden Erfindung liegt die Aufgabe zugrunde, ein System zur Regelung des Übersetzungsverhältnisses eines stufenlosen Getriebes zu schaffen, das in bestimmten Fahrsituationen, insbesondere während einer Rückschaltung, vorzugsweise eine Beschleunigung des Fahrzeuges gewährleistet, zumindest aber eine Verzögerung des Fahrzeuges zuverlässig ausschließt.

Diese Aufgabe wird mit einem, auch die kennzeichnenden Merkmale des System Anspruches 1 aufweisenden, gattungsgemäßen zur Regelung des Übersetzungsverhältnisses eines stufenlosen Getriebes gelöst.

Die Erfindung zeichnet sich durch die adaptive Charakteristik des Sollwertfilters aus. Dessen Zeitkonstante wird so an den aktuellen Fahrzeugzustand adaptiert, daß die Veränderung der Übersetzung nach einer Übergangsfunktion erfolgt, bei der das Fahrzeug eine vorgegebene Mindestbeschleunigung bzw. -verzögerung nicht unterschreitet. Die vorgeschlagene Lösung ist insbesondere dann von Vorteil, wenn sie in Verbindung mit einer Rückschaltung des stufenlosen Getriebes angewandt wird. Unter Berücksichtigung der fahrzeugspezifischen Gegebenheiten und der Fahrumgebung wird die Zeitkonstante vorzugsweise so adaptiert, daß das Fahrzeug bei einer Rückschaltung beschleunigt wird. Zumindest wird eine Zeitkonstante eingestellt, die ein Verzögern des Fahrzeugs verhindert. Der bei stufenlosen Getriebe bekannte "Hosenträgereffekt" wird somit vollständig eliminiert.

Weitere bevorzugte Ausgestaltungen sind Gegenstand der Unteransprüche 2 bis 8.

Weitere Merkmale der Erfindung und die daraus resultierenden Vorteile sind der nachfolgenden Beschreibung eines Ausführungsbeispiels anhand der Zeichnungen zu entnehmen.

Es zeigen:

Fig. 1 ein Schema eines stufenlosen Getriebes innerhalb eines Fahrzeugs;

Fig. 2 ein Blockschaltbild eines Regelkreises zur Regelung der Übersetzung des stufenlosen Getriebes nach Fig. 1;

Fig. 3 bis 14 verschiedene Übergangsfunktionen zur Erläuterung des dynamischen Verhaltens des Regelkreises nach Fig. 2.

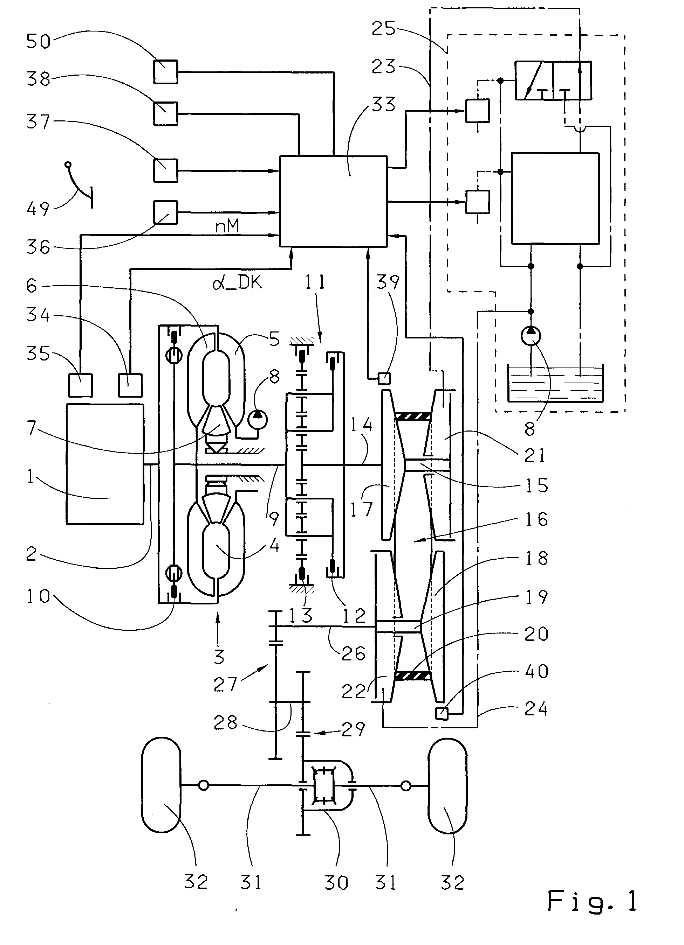

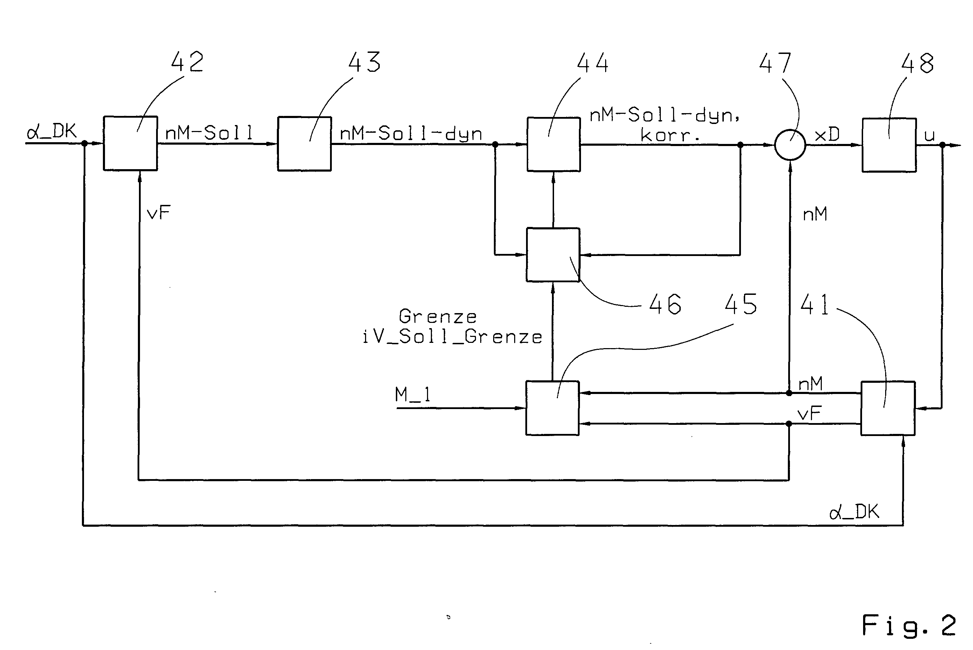

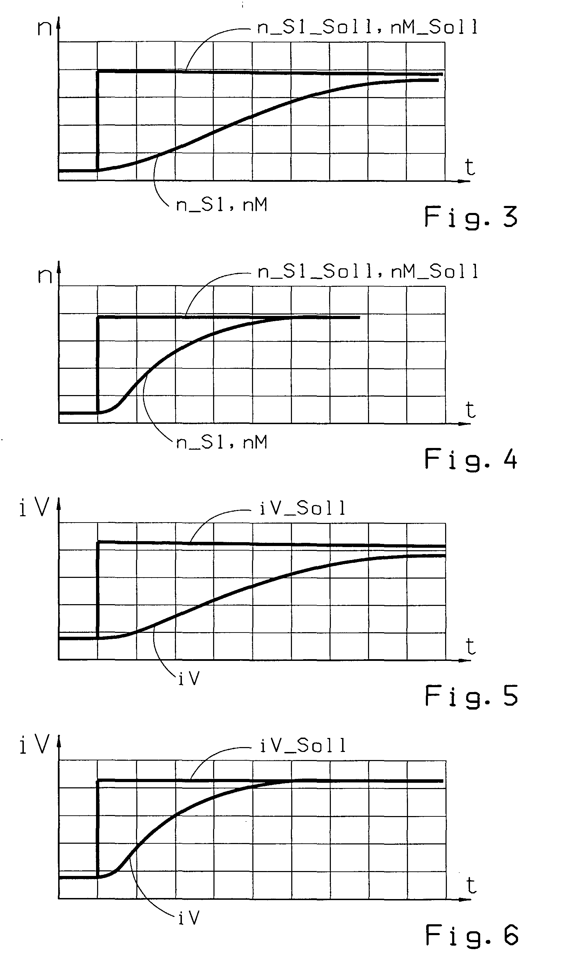

Aus Fig. 1 sind wesentliche Baugruppen zum Antrieb eines Fahrzeugs sowie das Schema eines stufenlosen Getriebes ersichtlich.

Eine Antriebseinheit 1, vorzugsweise eine Brennkraftmaschine, treibt über eine Antriebswelle 2 eine Anfahreinheit 3 an. Bevorzugt ist die Anfahreinheit 3 ein hydrodynamischer Drehmomentwandler 4. Dieser besteht aus einem Pumpen-, Turbinen- und Leitrad 5, 6 und 7. Eine Pumpe 8 wird vom Pumpenrad 5 angetrieben.

Das Turbinenrad 6 ist drehfest mit einer Zwischenwelle 9 verbunden. Eine direkte Antriebsverbindung zwischen der Antriebswelle 2 und der Zwischenwelle 9 besteht, wenn eine Wandlerüberbrückungskupplung 10 geschlossen wird. Die Zwischenwelle 9 ist die Eingangswelle eines Wendesatzes 11, mit dem die Fahrtrichtungen Vorwärts oder Rückwärts über Schaltelemente 12 (Kupplung) und 13 (Bremse) geschaltet werden können.

Eine Ausgangswelle 14 treibt eine Primärwelle 15 eines Variators 16 an.

Der Variator 16 besteht aus einer Primärscheibe 17 und einer Sekundärscheibe 18. Letztere ist mit einer Sekundärwelle 19 drehfest verbunden. Die Primär- und Sekundärscheiben 17 und 18 werden aus paarweise angeordneten Kegelscheiben gebildet, die zwischen sich ein Umschlingungsorgan 20, vorzugsweise eine Schubgliederkette, aufnehmen.

Ein Primärzylinder 21 und ein Sekundärzylinder 22 sind über Hydraulikleitungen 23 und 24 an eine Hydrauliksteuerung 25 angeschlossen. Die Sekundärwelle 19 ist mit einer Abtriebswelle 26 drehfest verbunden, die über eine Zahnradpaarung 27 eine weitere Zwischenwelle 28 antreibt. Die Zwischenwelle 28 steht über ein weiteres Zahnradpaar 29 mit einem Differential 30 in Antriebsverbindung. Die Antriebsleistung wird vom Differential 30 über Achshalbwellen 31 auf die angetriebenen Räder 32 des Fahrzeugs übertragen.

Ein weiteres wesentliches Element des stufenlosen Getriebes ist eine elektronische Getriebesteuerung (EGS) 33. In dieser sind die Kennfelder der Antriebseinheit 1, des hydrodynamischen Drehmomentwandlers 4 einschließlich der Schaltkennlinien der Wandlerüberbrückungskupplung 10 sowie zumindest eine Fahrstrategie abgelegt. Aufgabe der Getriebesteuerung ist es, die Übersetzung immer so einzustellen, daß die Führungsgröße Motordrehzahl (stationärer Soll-Drehzahlwert nM-Soll der Antriebseinheit 1) einer vorgegebenen Strategie folgt. Die aktuelle Motordrehzahl nM, die Regelgröße, wird in einem geschlossenen Regelkreis geregelt. Abweichungen zwischen Soll und Ist liefern Eingangsgrößen für die Hydrauliksteuerung 25 (Übersetzungsregler).

Ein Sensor 34 faßt die Eingangsvariable aktuelle Drosselklappenstellung, die mit α-DK bezeichnet ist. Mit einem Sensor 35 wird die Ist-Motordrehzahl nM erfaßt. Ein Sensor 36 überwacht die Stellung eines Steuerorgans 49, mit dem der Fahrer des Fahrzeugs einen Leistungsbedarf anmeldet. Mit diesem Steuerorgan wird die Stellung der Drosselklappe der Antriebseinheit verändert (E-Gas, Leistungsregeleinrichtung). Ein Sensor 37 liefert die Eingangsvariable der Position eines Wählhebels, die vom vorgewählten Fahrprogramm abhängig ist. Die Aufzählung der möglichen Eingangsvariablen ist unvollständig. Beispielsweise können zu diesen Größen die Temperatur der Hydraulikflüssigkeit (ATF) zählen. Diese wird mit Hilfe eines Temperatursensors 38 erfaßt. Für bestimmte Fahrsituationen müssen weitere Parameter verarbeitet werden. Um Kurvenfahrt zu erkennen, ist es sinnvoll, die Querbeschleunigung und/oder Raddrehzahldifferenzen zu verwerten. Dies geschieht mit einem weiteren Sensor 50.

Mit Hilfe eines Drehzahlsensors 39 wird die Drehzahl der Primärscheibe 17 überwacht. Ein weiterer Sensor 40 liefert die Eingangsvariable der Drehzahl der Sekundärscheibe 18. Die Eingangsvariablen werden in der elektronischen Getriebesteuerung 33 zu Ausgangsvariablen mit unterschiedlichen Zweckbestimmungen (Informationen zur Anzeige von Systemzuständen, Steuersignale für Stellglieder) verarbeitet. Einige der Ausgangsvariablen liegen als Eingangsvariable an der Hydrauliksteuerung 25 an, um die Betätigung von Elektromagnetventilen zur Steuerung eines Variators 16 des stufenlosen Getriebes auszulösen.

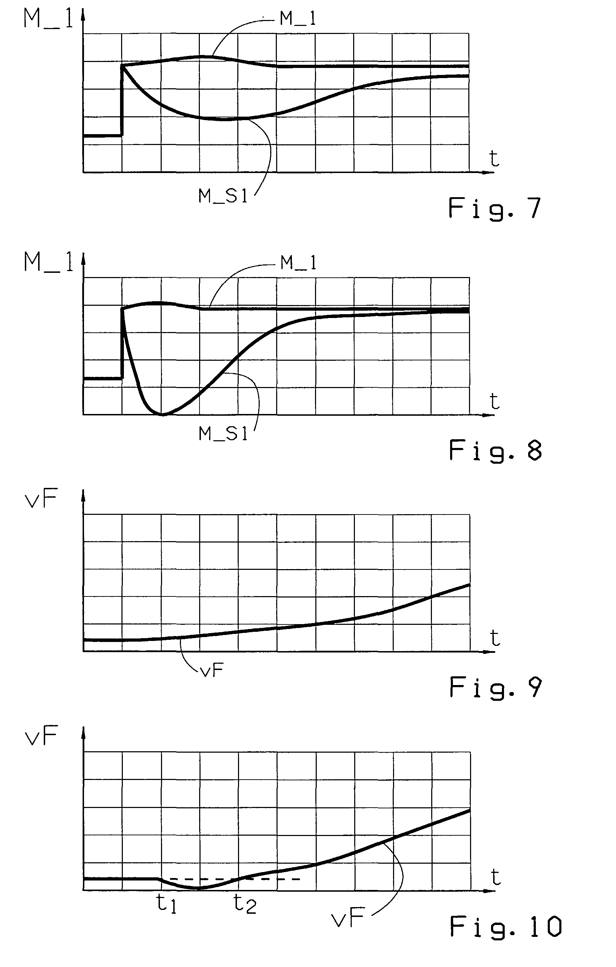

Die nachfolgenden Erläuterungen sollen zum besseren Verständnis der dynamischen Abläufe innerhalb des Regelkreises (Blockschaltbild nach Fig. 2) beitragen:

Die Antriebseinheit 1 läßt sich beschreiben durch ein Kennfeld der Form:

$$M\_1 = f\,(\alpha\text{-DK},\ \omega\_1)$$

Hierin bedeuten: M_1 das Moment der Antriebseinheit, α-DK = Drosselklappenstellung und ω_1 die Winkelgeschwindigkeit der Kurbelwelle bzw. der Antriebswelle 2.

Die Momentenbilanz an der Kurbel- bzw. Antriebswelle 2 (es wird von einer starren Welle ausgegangen) beträgt:

$$\Theta\_M\_1 * (d\omega\_1/dt) = M\_1 - M\_S1$$

Hierbei ist:

$$\omega\_1 = \omega\_S1$$

(S1 bedeutet die Primärscheibe 17)

Es gilt, daß die Kupplung bzw. Wandlerüberbrückungskupplung geschlossen ist.

Das Übertragungsverhalten des stufenlosen Getriebes kommt in folgender Übertragungsfunktion zum Ausdruck:

$$d\omega\_S1/dt = d\omega\_1/dt = iV * (d\omega\_S2/dt) + (diV/dt) * \omega\_S2$$

(S2 bedeutet die Sekundärscheibe 18)

Für die Momentenbilanz am Differential 30 gilt nachstehende Gleichung:

$$\Theta\_KW * (d\omega\_S2/dt) = M\_S2 - M\_D,$$

wobei

$$\omega\_S2 = \omega\_AB.$$

Hierin bedeuten: KW die Antriebswelle des Differentials D; im vorliegenden Fall ist dies die Zwischenwelle 28, und AB kennzeichnet die Abtriebswelle, die der Achshalbwelle 31 in Fig. 1 entspricht.

Für $\omega\_AB$ gilt:

$$\omega\_AB = i\, D * \omega\_RAD.$$

Hierin bedeuten: i D die Übersetzung des Differentials 30 und $\omega\_RAD$ die Winkelgeschwindigkeit des angetriebenen Rades 32.

Für das Fahrzeug gilt die Übertragungsfunktion:

$$m * (dvF/dt) = (M\_AR/r) - F_W$$

Hierin bedeuten: vF die Fahrzeuggeschwindigkeit und W entspricht dem Fahrwiderstand. vF läßt sich auch mit der Winkelgeschwindigkeit $\omega\_RAD$, multipliziert mit dem Radius des angetriebenen Rades 32, umschreiben.

Der Fahrwiderstand $F_W$ errechnet sich nach der Gleichung:

$$F_W = T1 + T2 + T3$$

mit den Termen:

$$T1 = (\rho\_L * A\_F * c\_W * vF^2)/2$$

$$T2 = m * g * (\sin\gamma + \mu * \cos\gamma)$$

$$T3 = M_{Bremse}/r$$

$$\mu = \text{Rollwiderstandsbeiwert}$$

$$\gamma = \text{Steigungswinkel}$$

Aus den oben angegebenen Gleichungen läßt sich für die Abtriebsdrehzahl (Drehzahl der Sekundärscheibe 18) folgende Differentialgleichung erster Ordnung angeben:

$$d\omega\_S2/dt = T4 * (T5 - T6 - T7 - T8 - T9)$$

mit den Termen:

$$T4 = 1/ (\Theta\_M\_1 * iV^2 + C_0)$$

$$T5 = iV * M\_1$$

$$T6 = C_1 * \omega\_S2^2$$

$$T7 = \Theta\_M * \omega\_S1 * (div/dt)$$

$$T8 = (m * g * r/i_D) * (\sin\gamma + \mu * \cos\gamma)$$

$$T9 = M_{Bremse}/i_D$$

Hierin bedeuten: $(\Theta\_M * iV^2 + C_0)$ die Summe der Trägheitsmomente, bezogen auf die Achse (Achshalbwellen 31), $C_1$ einen fahrzeugtypischen Parameter, mit dem der Fahrwiderstand berücksichtigt wird.

Anmerkung:

Der Ausdruck $(iV * \omega\_S2)$ ist zu ersetzen durch $\omega\_S1$.

Eingangs wurde bei der Erläuterung des Standes der Technik auf Nachteile eines stufenlosen Getriebes in bestimmten Fahrsituationen eingegangen. Es wurde erläutert, was unter dem "Hosenträgereffekt" zu verstehen ist und wie er sich dem Fahrer mitteilt. Es wurde dargelegt, warum dieser Effekt das subjektive Fahrempfinden (Driveability) verschlechtert. Diese Nachteile können sich auch anhand der vorstehend wiedergegebenen Differentialgleichung erörtern lassen. Hierzu braucht man sich nur vorzustellen, daß der Klammerausdruck der Differentialgleichung ein negatives Vorzeichen annimmt. Dies ist der Fall, wenn die Übersetzung iV mit einem großen Verstellgradienten in Richtung auf eine kürzere Übersetzung (Low) verstellt wird. Das gleiche trifft zu, wenn die Primärscheibe 17 durch sprungförmiges Anheben der Motordrehzahl schnell beschleunigt wird. Hieraus resultiert, daß die Sekundärscheibe 18 abgebremst wird. Das Fahrzeug wird demnach bei einer Rückschaltung nicht beschleunigt, sondern in der vom Fahrer als nachteilig empfundenen Weise verzögert.

Die Bedingung, daß die Sekundärscheibe 18 beschleunigt wird, lautet:

$$diV/dt < T10 - T11 - T12 - T13$$

mit den Termen:

$$T10 = (1/\Theta\_M\_1) * (M\_1/\omega\_S2)$$

$$T11 = (C_1 /\Theta\_M\_1) * (\omega\_S2^2/\omega\_S1)$$

$$T12 = (m * g * r (\sin\gamma + \mu * \cos\gamma))/(i_D * \Theta\_M * \omega\_S1)$$

$$T13 = M_{Bremse}/ (i_D * \Theta\_M * \omega\_S1)$$

Da die Geschwindigkeit des Fahrzeugs vF proportional zur Drehzahl der Sekundärscheibe 18 ist, wird, sofern diese Bedingung eingehalten wird, das Fahrzeug beschleunigt.

Im Grenzfall gilt, daß die Übersetzungsänderung diV/dt nicht größer sein darf als der in obenstehender Beziehung auf der rechten Seite stehende Ausdruck, der die Grenze darstellt und im nachfolgenden auch mit "Grenze" bezeichnet wird.

Demnach gilt:

$$diVG/dt = \text{"Grenze"}$$

Sofern diese Bedingung eingehalten wird, wird bei einer Rückschaltung die Sekundärscheibe 18 stets beschleunigt. Erfolgt eine Verstellung entlang dem Grenzgradienten "Grenze", so ist die Beschleunigung der Sekundärscheibe 18 bzw. des Fahrzeugs identisch Null.

Die vorliegende Erfindung baut auf diesen Erkenntnissen auf. Die Erfindung macht sich die Überlegung zunutze, daß durch die Überwachung des Übersetzungsgradienten diV/dt und durch den Vergleich mit der "Grenze" Maßnahmen ergriffen werden können, wenn bei zu schneller Verstellung die "Grenze" überschritten wird. Die Lösung verfolgt hierbei das Ziel, bei der geregelten Verstellung der Übersetzung einen bestimmten Abstand zur "Grenze" einzuhalten, um somit eine Mindestbeschleunigung, zumindest aber keine Verzögerung, während einer Rückschaltung zu gewährleisten.

Allgemein gilt, daß die verwendete Strategie auf der Vorgabe einer gewünschten Soll-Drehzahl nM-Soll für den Motor (Antriebseinheit 1) bzw. die Primärscheibe 17 basiert. Diese Soll-Drehzahl wird dann in eine Vorgabe für die Übersetzung iV des stufenlosen Getriebes umgerechnet. Die Übersetzung wird auf ihren Sollwert eingestellt. Der Regelkreis schließt sich durch einen erneuten Vergleich mit der aktuellen Motordrehzahl. Ein Regelkreis, der dieser allgemeinen Beschreibung entspricht, weist in erster Näherung ein Übertragungsverhalten eines PT$_1$-Gliedes auf.

Die Fig. 2 zeigt ein Blockschaltbild einer Vorrichtung zur Regelung des Übersetzungsverhältnisses iV eines stufenlosen Getriebes. Das Fahrzeug, die Antriebseinheit 1 und das stufenlose Getriebe werden durch einen Funktionsblock 41 zusammengefaßt (Strecke).

Ein Funktionsblock 42 dient zur Darstellung eines stationären Betriebspunktes. Am Funktionsblock 42 liegt eine Eingangsvariable an, die den Leistungsbedarf repräsentiert, den der Fahrer des Fahrzeugs über das Steuerorgan 49 anmeldet (Sensor 36). Diese Eingangsvariable soll der aktuellen Drosselklappenstellung α-DK entsprechen. Am Funktionsblock 42 liegt ferner noch die aktuelle Fahrzeuggeschwindigkeit vF bzw. die Drehzahl n_S2 der Sekundärscheibe 18 an. Der Funktionsblock 42 dient der Berechnung einer Führungsgröße, d. h. einem stationären Soll-Drehzahlwert nM-Soll der Antriebseinheit 1. Dieser wird einem Betriebskennfeld entnommen, das eine Zuordnung der Stellung des Steuerorgans und der Fahrzeuggeschwindigkeit vF zur Soll-Drehzahl nM-Soll enthält. Am Ausgang des Funktionsblokes 42 liegt dieser stationäre Soll-Drehzahlwert nM-Soll an.

Diese stationäre Soll-Drehzahl wird einem Sollwertfilter 43 zugeleitet, mit dem der Verlauf einer instationären Soll-Drehzahl nM-Soll-dyn bei sprungförmiger Änderung der stationären Soll-Drehzahl nM-Soll durch gezielte Zuordnung einer Übergangsfunktion (PT$_1$-Verhalten, Zeitkonstante T S) verändert wird. Hierbei ist die Möglichkeit gegeben, aus mehreren Übertragungsfunktionen diejenige auszuwählen, die einem spezifischen Betriebszustand (Zugbetrieb, Schubbetrieb, Kick-down, Kurvenfahrt usw.) am besten Rechnung trägt. Am Ausgang des Sollwertfilters 43 liegt somit eine nach einer Übergangsfunktion variierte, instationäre Soll-Drehzahl nM-Soll-dyn an. Dieser Wert wird einem Funktionsblock 44 zugeführt.

Der Funktionsblock 44 filtert den dynamischen Sollwert nM-Soll-dyn nochmals. Als Resultat dieser Filterung ergeben sich zwei Möglichkeiten:

Bei der ersten Möglichkeit wird die Übergangsfunktion des Funtionsblockes 43, d. h. der Verlauf der instationären Soll-Drehzahl nM-Soll-dyn mit der Zeitkonstanten T S unverändert beibehalten oder die Zeitkonstante T_S wird durch eine variable Zeitkonstante T_RS ersetzt.

Die Zeitkonstante T_RS wird so berechnet, daß der Gradient der instationären Soll-Drehzahl nM-Soll-dyn bzw. die entsprechende Übersetzung iV_Soll-dyn einem bestimmten prozentualen Anteil des berechneten Grenzwertes

$$\text{"Grenze"} = diV\_pG/dt$$

entspricht. Die "Grenze", d. h. der Übersetzungsgradient der Übersetzung iV_Soll_Grenze, wird in einem Funktionsblock 45 berechnet. An diesem Funktionsblock liegen die Eingangsvariablen an, die, wie weiter vorne dargelegt, zur Berechnung erforderlich sind. Hierzu zählen die Fahrgeschwindigkeit, die aktuelle Motordrehzahl, die Drehzahlen der Primär- und Sekundärscheibe 17, 18, die auf die Achse bezogenen Trägheitsmomente und die fahrzeugtypischen Variablen. Der Funktionsblock 45 liefert den Verstellgradienten der Übersetzung iV_Soll_Grenze als Ausgangsgröße, die einem Funktionsblock 46 zugeführt wird.

Im Funktionsblock 46 wird der Gradient der Übersetzung iV_Soll_dyn mit dem Gradienten iV_Soll_Grenze verglichen. Das Ergebnis dieses Vergleiches ist ein Korrekturfaktor, mit dem die Zeitkonstante des Funktionsblockes 44 adaptiert wird.

Durch den Funktionsblock 44 wird der dynamische Sollwert nM-Soll-dyn nochmals gefiltert. Am Ausgang liegt dann ein korrigierter dynamischer Soll-Drehzahlwert nM-Soll-dyn-korr bzw. eine entsprechende Übersetzungsvorgabe an. Dieser Wert wird einer Subtraktionsstelle 47 zugeführt. An der Subtraktionsstelle 47 liegt ferner der Ist-Drehzahlwert nM des Antriebsmotors an. Das Ergebnis der Subtraktion ist eine Regeldifferenz xD, die einem Drehzahlregler 48 zugeführt wird. Der Drehzahlregler 48 kann vorzugsweise als strukturvariabler Regler ausgebildet sein, wobei die Strukturumschaltung in Abhängigkeit der Regeldifferenz xD vorgenommen wird.

Der Drehzahlregler 48 hat Servofunktion und soll den Ist-Drehzahlwert nM des Antriebsmotors in allen Betriebszuständen möglichst schnell und stabil dem korrigierten dynamischen Soll-Drehzahlwert nM-Soll-dyn-korr angleichen. Die Übersetzung wird hierbei nach einer Übergangsfunktion verändert, deren Zeitkonstante (T_S oder T_RS) - wie erläutert - in Abhängigkeit von fahrzeugspezifischen Parametern sowie der aktuellen Fahrsituation so adaptiert wird, daß die Grenze der möglichen Verstellung, die mit "Grenze" definiert ist, keinesfalls überschritten wird. Wird die Veränderung der Übersetzung im Grenzfall entlang der "Grenze" vorgenommen, bedeutet dies, daß das Fahrzeug zwar nicht verzögert, aber auch nicht beschleunigt wird. Demzufolge steht die Bremswirkung des Motors bei Bergabfahrt voll zur Verfügung. Zumindest aber ist auch in diesem Fall der sogenannte "Hosenträgereffekt" (gerade) kompensiert.

Bevorzugt wird die Übergangsfunktion der Veränderung der Übersetzung so gewählt, daß ein definierter Abstand, zum Beispiel von 50 %, von der "Grenze" eingehalten wird. In diesem Fall wird das Fahrzeug bei einer Rückschaltung nicht verzögert, sondern beschleunigt.

Zur Verdeutlichung der Zusammenhänge dienen die schematisch wiedergegebenen Diagramme nach den Fig. 3 bis 14.

Den Diagrammen nach den Fig. 3 bis Fig. 12 liegt (beispielhaft) folgender Arbeitspunkt zugrunde:

$\alpha$_DK = 10 %
iV = 0,3793
n_S1 = 2 105 RpM
n_S2 = 5 551 RpM
vF = 112,25 km/h
M_Mot = 50,51 Nm
M_S1 = 50,51 Nm

M_S2 = 19,16 Nm
M_AR = 99,61 Nm

Zum Zeitpunkt t = 100 ms wird die Drosselklappe sprungförmig auf 100 % gesetzt.

Die hydraulische Zeitkonstante wird zu Null gesetzt.

Das Diagramm nach Fig. 3 zeigt den Verlauf der Drehzahl der Primärscheibe 17 n_S1 bei sprungförmiger Anhebung der Soll-Drehzahl nM-Soll (= n_S1-Soll). Es liegt eine langsame Verstellung zugrunde mit einer Zeitkonstanten T RS von beispielsweise 200 ms.

Fig. 4 gibt bei ansonsten gleichen Verhältnissen die Sprungantwort bei einer schnellen Verstellung mit einer Zeitkonstanten T_RS von beispielsweise 100 ms wieder. Man erkennt, daß die Drehzahl n_S1 der Primärscheibe 17 ihren neuen Sollwert bei einer schnellen Rückschaltung früher erreicht als bei einer langsamen Rückschaltung. Der prinzipielle Verlauf entspricht einem $PT_1$-Übergangsverhalten.

Aus den Diagrammen entsprechend den Fig. 5 und 6 folgt, daß für den Verlauf des Übersetzungs-Sollwertes iV_Soll das gleiche gilt. Bei einer langsamen Verstellung stellt sich ein entsprechend langsamer Übergang auf die neue Übersetzung iV_Soll ein (Fig. 5). Der Übersetzungs-Sollwert iV_Soll berechnet sich als Funktion der Soll-Drehzahl nM-Soll (= n S1 Soll) und der aktuellen Drehzahl n_S2 der Sekundärscheibe 18.

Das Diagramm nach Fig. 7 verdeutlicht, daß das Moment an der Primärscheibe 17 M_S1 einen sprunghaften Anstieg beim Gasgeben zeigt. Es fällt anschließend bis auf einen Minimalwert ab und steigt schließlich asymptotisch gegen den entsprechenden Endwert.

Dem Diagramm nach Fig. 8 ist zu entnehmen, daß der Minimalwert des Momentes der Primärscheibe 17 M S1 bei einer schnellen Rückschaltung deutlich geringer ist. Die Differenz zwischen dem Motormoment M_1 und dem Moment an der Primärscheibe M_S1 steht zur Beschleunigung der Primärscheibe bzw. des Motors zur Verfügung.

Der Verlauf des Differenzmomentes an der Sekundärscheibe 18 ist nicht dargestellt, entspricht aber prinzipiell den Verläufen der Fahrzeuggeschwindigkeit vF, wie sie aus den Fig. 9 und 10 hervorgehen. Bei einer langsamen Verstellung (langsame Rückschaltung) steigt die Fahrgeschwindigkeit langsam an (Fig. 9). Das Fahrzeug wird entsprechend langsam beschleunigt.

Bei einer schnellen Verstellung (schnelle Rückschaltung) zeigt das Differenzmoment an der Sekundärscheibe 18 einen Übergang ins Negative, so daß die Sekundärscheibe kurzzeitig abgebremst wird (Hosenträgereffekt). Dies zeigt der Verlauf der Fahrzeuggeschwindigkeit vF, wie er in Fig. 10 abgebildet ist. Bei einer schnellen Rückschaltung zeigt die Fahrzeuggeschwindigkeit vF ein Absinken unter den Ausgangswert (Hosenträgereffekt). Bis zum Zeitpunkt $t_1$ (etwa 400 ms) findet keine Beschleunigung des Fahrzeuges statt. Für eine weitere Zeitspanne $t_2 - t_1$ wird das Fahrzeug verzögert. Vom Zeitpunkt t2 ab erfolgt eine vergleichsweise höhere Beschleunigung des Fahrzeugs.

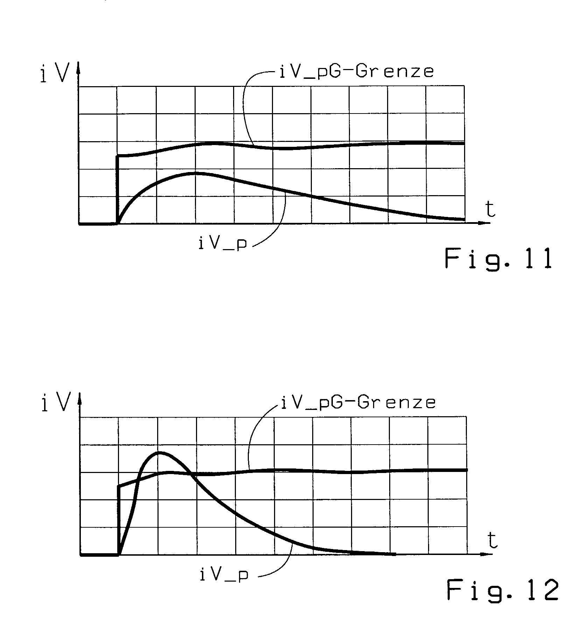

Der Verlauf des Übersetzungsgradienten iV_p und der "Grenze" iV_pG ist der Fig. 11 bei einer langsamen Verstellung (Rückschaltung) und Fig. 12 für eine schnelle Verstellung (Rückschaltung) zu entnehmen. Bei einer langsamen Verstellung bleibt der Verlauf des Übersetzungsgradienten iV p deutlich unterhalb der Grenze. Analog zur Abbildung nach Fig. 10 zeigt die Fig. 12 wiederum deutlich das Eintreten des Hosenträgereffekts bei einer schnellen Verstellung (Rückschaltung). Der aktuelle Gradient der Übersetzung iV_p liegt dann zeitweise ($t_2 - t_1$) über dem berechneten Grenzgradienten "Grenze".

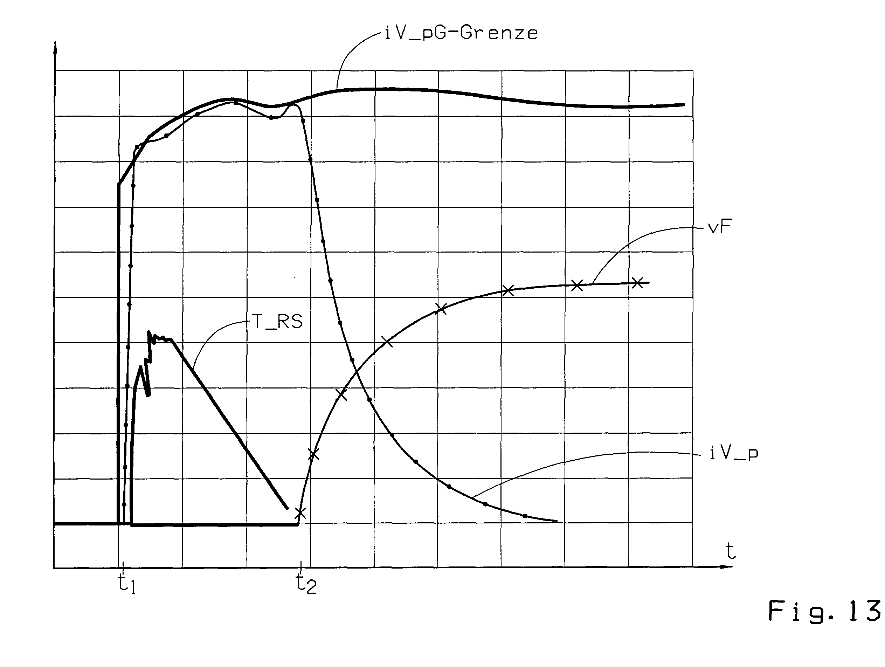

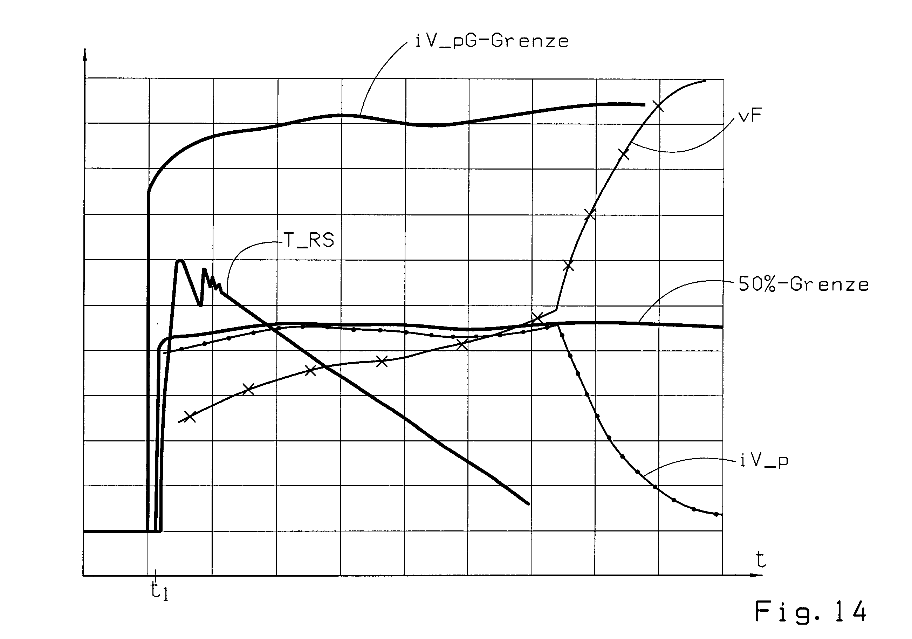

Die Fig. 13 und 14 sollen die Auswirkungen der Funktionsblöcke 44, 45 und 46 nochmals verdeutlichen:

Der Fig. 13 liegen Übergangsfunktionen zugrunde, bei denen die Zeitkonstante T_RS so adaptiert ist, daß der Verlauf der Übersetzung iV_p entlang der "Grenze" iV_pG verläuft. Die Zeitkonstante T_RS beträgt 200 ms. Innerhalb einer Zeitspanne $t_2 - t_1$ (110 ms < t < 370 ms) ist die Beschleunigung des Fahrzeugs identisch Null.

Durch den Vergleich mit den Übergangsfunktionen nach Fig. 14 werden die Vorteile der erfindungsgemäßen Lösung deutlich. Der tatsächliche Übersetzungsverlauf iV_p verläuft mit einem Abstand zum Übersetzungsverlauf iV_pG (Grenze) oder, anders ausgedrückt, entlang einer berechneten Grenze, die etwa 50 % der Grenzübersetzung ausmacht. Die adaptierte Zeitkonstante T_RS beträgt ca. 600 ms.

Zu erkennen ist deutlich eine stetige Beschleunigung des Fahrzeugs vom Zeitpunkt $t_1$ an. Dies verdeutlicht auch der Verlauf der Fahrzeuggeschwindigkeit vF (mit Kreuzen gekennzeichnet). Im Vergleich zum Diagramm nach Fig. 13 ist augenfällig, daß der sogenannte Hosenträgereffekt nicht auftritt.

Bezugszeichen

1  Antriebseinheit
2  Antriebswelle
3  Anfahreinheit
4  hydrodynamischer Drehmomentwandler

5     Pumpenrad
6     Turbinenrad
7     Leitrad
8     Pumpe
9     Zwischenwelle
10     Wandlerüberbrückungskupplung
11     Wendesatz
12     Schaltelement
13     Schaltelement
14     Ausgangswelle
15     Primärwelle
16     Variator
17     Primärscheibe
18     Sekundärscheibe
19     Sekundärscheibe
20     Umschlingungsorgan
21     Primärzylinder
22     Sekundärzylinder
23     Hydraulikleitung
24     Hydraulikleitung
25     Hydrauliksteuerung
26     Abtriebswelle
27     Zahnradpaar
28     Zwischenwelle
29     Zahnradpaar
30     Differential
31     Achshalbwellen
32     angetriebene Räder
33     elektronische Getriebesteuerung (EGS)
34     Sensor
35     Sensor
36     Sensor
37     Sensor
38     Temperatursensor
39     Drehzahlsensor
40     Sensor
41     Funktionsblock
42     Funktionsblock
43     Sollwertfilter
44     Funktionsblock
45     Funktionsblock
46     Funktionsblock
47     Subtraktionsstelle
48     Drehzahlregler
49     Steuerorgan
50     Sensor

**Patentansprüche**

1.    System zur Regelung des Übersetzungsverhältnisses (iV) eines stufenlosen Getriebes in einem Fahrzeug mit einem Antriebsmotor und einer Leistungsregeleinrichtung, der über ein Steuerorgan (49) Soll-Drehzahlwerte (nM-Soll) vorgegeben werden, die mit gemessenen Ist-Drehzahlwerten (nM) des Antriebsmotors verglichen werden, und mit einer Stellvorrichtung zur Veränderung des Übersetzungsverhältnisses (iV) des stufenloses Getriebes, welcher Stellsignale nach Maßgabe der Differenzen von Soll- und Ist-Drehzahlwerten zugeführt werden, wobei der Soll-Drehzahlwert (nM-Soll oder nM-Soll-dyn) mittels eines Sollwertfilters (44) gefiltert wird, dadurch **gekennzeichnet**, daß der Sollwertfilter (44) eine Zeitkonstante (T_RS) aufweist, die als Funktion des Gradienten (diV/dt) des Übersetzung sverhältnisses (iV) in der Weise adaptierbar ist, daß die Veränderung des Übersetzung sverhältnisses nach einer Übergangsfunktion erfolgt, deren Grenze durch eine maximale Verstellgeschwindigkeit (diV_pG/dt = "Grenze"), bei der das Fahrzeug zumindest nicht verzögert wird, definiert ist.

2. System nach Anspruch 1, dadurch **gekennzeichnet**, daß die Zeitkonstante (T_RS) so berechnet wird, daß der Gradient (diV/dt) des Übersetzung sverhältnisses (iV) bzw. die Veränderung des Soll-Drehzahlwertes (nM-Soll, nM-Soll-dyn) einem vorbestimmten Anteil der Grenze der maximalen Verstellgeschwindigkeit (diV_pG/dt = "Grenze") entspricht.

3. System nach den Ansprüchen 1 und 2, dadurch **gekennzeichnet**, daß der Gradient des Grenzübersetzung sverhältnisses (iV_Soll_Grenze) in einem Funktionsblock (45) berechnet wird, an dem zumindest die Fahrgeschwindigkeit (vF), der Ist-Drehzahlwert (nM), die Drehzahlen (n S1, n_S2) der Primär- und Sekundärscheibe (17, 18), die auf die Achse (32) bezogenen Trägheitsmomente sowie die fahrzeugtypischen Variablen als Eingangsvariable anliegen.

4. System nach Anspruch 3, dadurch **gekennzeichnet**, daß der Gradient des Soll-Übersetzung sverhältnisses (iV_Soll bzw. iV_Soll_dyn) mit dem Gradienten des Grenzübersetzung sverhältnisses (iV_Soll_Grenze) verglichen wird und daß bei Überschreiten des Gradienten (iV_Soll_Grenze) ein Korrekturfaktor ermittelt wird, mit dem die Zeitkonstante (T_RS) des Sollwertfilters (44) adaptiv verändert wird.

5. System nach Anspruch 1, dadurch **gekennzeichnet**, daß der am Sollwertfilter (44) anliegende Soll-Drehzahlwert (nM-Soll) ein nach einer Übergangsfunktion variierter, instationärer Soll-Drehzahlwert (nM-Soll-dyn) ist.

6. System nach Anspruch 5, dadurch **gekennzeichnet**, daß am Ausgang des Sollwertfilters (44) ein korrigierter, instationärer Soll-Drehzahlwert (nM-Soll-dyn-korr) vorliegt.

7. System nach Anspruch 1, dadurch **gekennzeichnet**, daß die Zeitkonstante (T_RS) bei Veränderung des Übersetzung sverhältnisses (iV) als Folge einer Rück-Schaltung adaptiert wird.

8. System nach Anspruch 2, dadurch **gekennzeichnet,** daß die Veränderung des Übersetzung sverhältnisses nach einer Übergangsfunktion erfolgt, deren Abstand von der Grenze der maximalen Verstellgeschwindigkeit (diV_pG/dt = "Grenze") etwa 50 % beträgt.

**Claims**

1. System for the control of the transmission ratio (iV) of a continuously variable gearbox in a vehicle having a drive engine and a power control device, there being impressed on the latter via a control member (49) theoretical rotational speed values (nM-theor.) that are compared with measured actual rotational speed values (nM) of the drive engine, and having an actuator for varying the transmission ratio (iV) of the continuously variable gearbox to which setting signals are fed in accordance with the differences between the theoretical and actual rotational speed values, wherein the theoretical rotational speed value (nM-theor. or nM-theor.-dyn) are filtered by means of a theoretical value filter (44), characterized in that the theoretical value filter (44) has a time constant (T_RS) that can be adapted as a function of the gradient (diV/dt) of the transmission ratio (iV) in such a way that the transmission ratio is varied according to a transition function whose limit is defined by a maximum adjustment speed (diV_pG/dt = "limit") at which the vehicle is at least not decelerated.

2. System according to Claim 1, characterized in that the time constant (T_RS) is calculated in such a way that the gradient (diV/dt) of the transmission ratio (iV) or the variation in the theoretical rotational speed value (nM-theor., nM-theor.-dyn corresponds to a predetermined component of the limit of the maximum adjustment speed (diV_pG/dt = "limit").

3. System according to Claims 1 and 2, characterized in that the gradient of the limit transmission ratio (iV_theor._limit) is calculated in a function block (45) to which at least the vehicle speed (vF), the actual rotational speed value (nM), the rotational speeds (n_S1, n_S2) of the primary and secondary discs (17, 18), the moments of inertia about the axis (32) and the vehicle-typical variables are applied as input variable.

4. System according to Claim 3, characterized in that the gradient of the theoretical transmission ratio (iV_theor. or iV_theor._dyn) is compared with the gradient of the transmission ratio (iV_theor._limit) and in that, if the gradient (iV_theor._limit) is exceeded, a correction factor is determined with which the time constant (T_RS) of the theoretical value filter (44) is adaptively varied.

5. System according to Claim 1, characterized in that the theoretical rotational speed value (nM-theor.) applied to the theoretical value filter (44) is a non-steady-state theoretical rotational speed value (nM-theor.-dyn) that is varied according to a transition function.

6. System according to Claim 5, characterized in that a corrected, non-steady-state theoretical rotational speed filter (nM-theor.-dyn-corr.) is present at the output of the theoretical value filter (44).

7. System according to Claim 1, characterized in that the time constant (T_RS) is adapted if the transmission ratio (iV) is altered as a consequence of a downward change.

8. System according to Claim 2, characterized in that the transmission ratio is varied according to a transition function whose distance from the limit of the maximum adjustment speed (diV_pG/dt = "limit") is about 50%.


**Revendications**

1. Système pour la régulation du rapport de transmission (iV) d'une transmission réglable en continu dans un véhicule comprenant un moteur d'entraînement et un dispositif de régulation de la puissance auquel sont prescrites, par l'intermédiaire d'un organe de commande (49), des valeurs de consigne de la vitesse de rotation (nM-Soll), lesquelles sont comparées avec des valeurs réelles mesurées de la vitesse de rotation (nM) du moteur d'entraînement, et comprenant un dispositif de réglage servant à faire varier le rapport de transmission (iV) de la transmission réglable en continu, auquel sont acheminés des signaux de réglage fonction de la différence entre les valeurs de consigne et réelle de la vitesse de rotation, la valeur de consigne de la vitesse de rotation (nM-Soll ou nM-Soll-dyn) étant filtrée au moyen d'un filtre de valeur de consigne (44), **caractérisé** en ce que le filtre de valeur de consigne (44) présente une constante de temps (T_RS) qui peut être adaptée en fonction du gradient (diV/dt) du rapport de transmission (iV) afin que la variation du rapport de transmission se produise selon une fonction de transition dont la limite est définie par une vitesse de modification maximale (diV_pG/dt = "Grenze") à laquelle le véhicule n'est du moins pas décéléré.

2. Système selon la revendications 1, **caractérisé** en ce que la constante de temps (T_RS) est calculée de manière que le gradient (diV/dt) du rapport de transmission (iV) ou la variation de la valeur de consigne de la vitesse de rotation (nM-Soll, nM-soll-dyn) corresponde à une proportion prédéterminée de la limite de la vitesse de modification maximale (diV_pG/dt = "Grenze").

3. Système selon les revendications 1 et 2, **caractérisé** en ce que le gradient du rapport de transmission limite (iV_Soll_Grenze) est calculé dans un bloc de fonction (45) auquel sont appliquées, comme variables d'entrée, au moins la vitesse de marche (vF), la valeur réelle de la vitesse de rotation (nM), les vitesses de rotation (n_S1, n_S2) de la poulie primaire et de la poulie secondaire (17, 18), les moments d'inertie rapportés à l'axe (32), ainsi que les variables typiques du véhicule.

4. Système selon la revendication 3, **caractérisé** en ce que le gradient du rapport de transmission de consigne (iV_Soll ou iV_Soll_dyn) est comparé aux gradients du rapport de transmission limite (iV_Soll_Grenze) et en ce que, lorsque le gradient (iV_Soll_Grenze) est dépassé, un facteur de correction est calculé avec lequel la constante de temps (T_RS) du filtre de valeur de consigne (44) est modifiée de façon adaptative.

5. Système selon la revendication 1, **caractérisé** en ce que la valeur de consigne de vitesse de rotation (nM-Soll) appliquée au filtre de valeur de consigne (44) est une valeur de consigne de vitesse de rotation (nM-Soll-dyn) non stationnaire, qui varie selon une fonction de transition.

6. Système selon la revendication 5, **caractérisé** en ce qu'à la sortie du filtre de valeur de consigne (44), on trouve une valeur de consigne de vitesse de rotation non stationnaire, corrigée (nM-Soll-dyn-korr).

7. Système selon la revendicaticn 1, **caractérisé** en ce qu'en présence d'une variation du rapport de transmission (iV) résultant d'un rétrogradage, la constante de temps (T_RS) est adaptée.

**8.** Système selon la revendicaticn 2, **caractérisé** en ce que la variation du rapport de transmission se produit selon une fonction de transition dont l'écart par rapport à la limite de la vitesse de modification maximale (diV_pG/dt = "Grenze") est d'environ 50%.

Fig. 1

EP 0 840 863 B1

Fig. 2

n_S1_Soll, nM_Soll

n_S1, nM

Fig. 3

n_S1_Soll, nM_Soll

n_S1, nM

Fig. 4

iV_Soll

iV

Fig. 5

iV_Soll

iV

Fig. 6

Fig. 7

Fig. 8

Fig. 9

Fig. 10

Fig. 11

Fig. 12

Fig. 13

iV_pG-Grenze

vF

T_RS

50%-Grenze

iV_p

$t_1$

t

Fig. 14

EP 0 840 863 B1